Europäisches Patentamt

European Patent Office

Office européen des brevets

(11) Publication number : **0 477 038 A2**

# (12) EUROPEAN PATENT APPLICATION

(21) Application number : **91308666.6**

(22) Date of filing : **20.09.91**

(51) Int. Cl.$^5$ : **G01N 15/02**, G02B 27/00, F21P 7/00

(30) Priority : **21.09.90 JP 253533/90**

(43) Date of publication of application :
**25.03.92 Bulletin 92/13**

(84) Designated Contracting States :
**DE FR GB IT**

(71) Applicant : **Hiraoka, Masayuki**
**6-7-302 Ushita Asahi 1-Chome, Higashi-ku**
**Hiroshima City, Hiroshima Prefecture (JP)**

(72) Inventor : **Hiraoka, Masayuki**
**6-7-302 Ushita Asahi 1-Chome, Higashi-ku**
**Hiroshima City, Hiroshima Prefecture (JP)**

(74) Representative : **Waldren, Robin Michael**
**Marks & Clerk, 57-60 Lincoln's Inn Fields**
**London WC2A 3LS (GB)**

(54) Method and apparatus for discriminating moving granulate entities.

(57)   In a method and apparatus for discriminating moving granulate entities, such as water droplets (a ....f), (a'.......f'), the entities are alternately illuminated with stroboscopic light sources of differing first (R) and second (G) colours.

FIG 3

The present invention relates to a method and apparatus for discriminating granular or drop-like components of such phenomena as aerosols, rain, waterfalls, streams, or fountains, either for scientific observation or for obtaining aesthetically pleasing displays.

Previously, waterfalls and fountains have been highlighted for aesthetic effect by steady coloured lights, including with lights of various colours shone simultaneously or alternately.

As described in Japanese Patent No. 86-026068 sound waves are generated in running water such that, when the dense part of these waves arrives at a fountain aperture that is perpendicular or close to perpendicular to the wave, the water molecules near the aperture begin moving extremely rapidly and pressure increases. As a result, when this highly active water leaves the aperture it forms into distinct and separate droplets, which sparkle when illuminated stroboscopic light, producing a pleasing water-flow effect.

The known non-strobe single or multiple colour light illumination methods mentioned above provide single or mixed coloured lighting with little variation, which whilst having some aesthetic appeal, cannot produce the visual effects of the present invention.

The problem solved by the present invention is how to illuminate such granular or droplet materials with at least two colours but to get individual droplets to shine in a respective single pure colours.

Thus one object of the present invention is to provide a method for discriminating moving droplet granulate objects such that the movement of individual droplets in rain, waterfalls, streams, and fountains can be minutely observed, either for scientific analysis or so that the granules or droplets can be caused to sparkle in such a way as to have a visually pleasing effect.

This invention, designed for the purposes described above, discriminates the moving granules of rain, waterfalls, streams, and fountains etc by alternate illumination with multistrobe lights.

Thus one aspect of the present invention provides a method of discriminating moving granulate entities by illumination with at least two stroboscopic light sources of respective different colours.

In another aspect, the present invention provides an apparatus comprising a means for producing moving granulate entities, a first coloured stroboscopic light source and a second coloured stroboscopic light source of a different colour from said first source.

As used herein, the term granulate entities means particles, granules, beads, aerosols, liquid droplets, bubbles of one phase in another (eg liquid bubbles in air or air bubbles in a liquid) or the like.

The light sources may flash at the same or different frequencies. Preferably though they flash at a frequency of at least 10Hz, for example in the range 45Hz-70Hz. The flashing freqency may be related to the frequency of the mains electricity supply. It is also possible to vary the flashing frequency of one or both sources, using means which will be apparent to persons skilled in the art.

Fountains and waterfalls can be seen as the movement of many drops of water. If these moving drops are illuminated by alternating strobe lights of, for example, red and green light, the drops that are for one instant sparkling red will, after travelling a given distance, sparkle green.

At this point, the previously red drops will remain sparkling as an after-image such that the viewer will simultaneously perceive distinct red and green drops separated by a certain distance.

Thus, if the drops are alternately illumined by red and green light as they move, the many and continuously moving drops of the fountain or waterfall will appear as points of brilliant light alternately sparkling in red and green, offering the viewer an extremely beautiful aesthetic experience.

The two strobe lights can be increased to three or more, and the moving grains can be other than water. If, for example, the fountain sprays glass or plastic beads, the same flowing effect and the same aesthetic beauty would result.

The present invention will now be explained in more detail by the following description of a preferred embodiment and with reference to the accompanying drawings, in which:-

Figure 1 shows a situation in which two types of multistrobe light, one red and one green, are shining alternately;

Figure 2 shows a fountain of water droplets, being illuminated by a red multistrobe light at time (t) = 0.5/60(s); and

Figure 3 shows the fountain of droplets shown in Figure 2 when also illuminated by a green (G) multistrobe light at time (t) = 1/60(s).

The following described embodiment is directed to a system for producing a display having a pleasing visual appearance. However, in the light of this disclosure it will be apparent to persons skilled in the art how to use an analogous apparatus and method for scientific or engineering applications, for example studying the physical dynamics of aerosols or the behaviour of a stream of granules or particles during a manufacturing operation.

The described embodiment is particularly designed to illuminate droplets in a stream created by a device related to a previously noted invention by the present applicant, Japanese Pat. No. 86-026068 "Method for Generating a Stream of Distinct Droplets by In-Water Sound Waves."

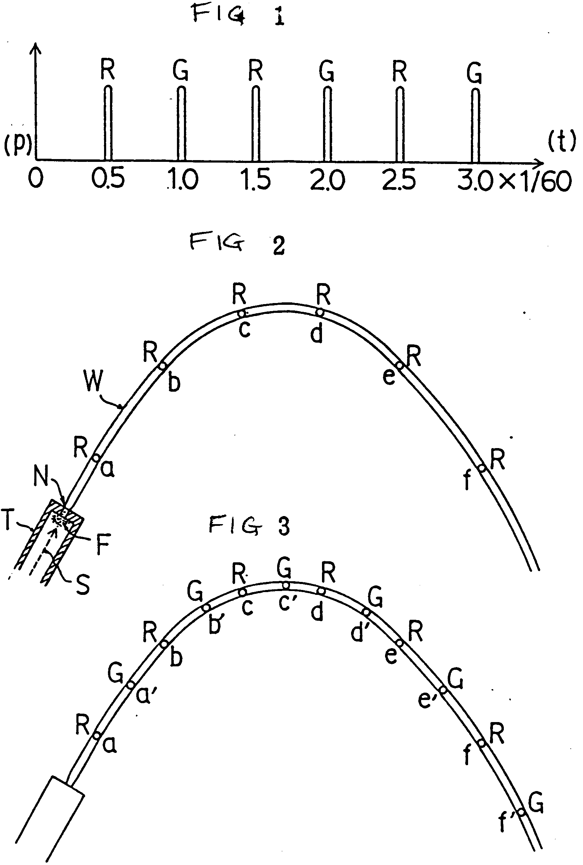

The following is a description of the method for obtaining a stream of separate droplets, as described in Japanese Patent No. 86-026068 as shown in Figure 2, along a hose (T) carrying water at a fixed pressure, an AC magnetic timer (not shown) provides an impact at regular intervals, thereby generating within the water sound waves at the same frequency as the mains current (e.g., 60Hz). In this way, dense areas of water will occur 60 times every second.

When the dense part of this in-water sound wave arrives at an aperture (N) in a wall that is perpendicular to the wave, an area (F) in which the water molecules are moving extremely rapidly is produces in the area of the aperture (N). When this area of fast-moving molecules (F) leaves the aperture (N), the resulting parabolic stream of water (W) becomes a series of separate droplets (a), (b)......(f).

When the thus obtained stream of droplets (W) is illuminated by a red (R) stroboscopic light at time (t) = 0.5/60(s), the droplets (a), (b),...(f) shine red as shown in Figure 2.

Then, when the stream is illuminated by a green (G) stroboscopic light at time (t) = 1/60(s), as shown in Figure 3, the droplets that were shining red in locations (a), (b),... (f), now shine green (G) in locations (a′), (b′),... (f′).

If the light source is illuminated such that the after-image of a viewer observing the fountain lasts 0.4/60(s), to that viewer's eyes the red droplets shining at positions (a), (b), ... (f) still remain, so at (t′)-1/60(s) the red (R) and green (G) droplets are seen simultaneously.

As the stroboscopic lights continue to flash, there is a repetition of the same effect, which gives the visually pleasing effect of a continuously flowing stream of orderly and alternating red (R) and green (G) droplets.

The above is an explanation of the situation in which both red (R) and green (G) multistrobe lights are flashing at 60Hz. If the red (R) multistrobe light shines at 60Hz while the green (G) multistrobe light shines at 55Hz, the red (R) droplets (a), (b), ... (f) will appear still (unmoving), while the green (G) droplets (a′), (b′), ... (f′) will appear to be travelling down the parabola from the fountain (W).

Figure 1 shows the state of the two multistrobe lights alternatively shining red and green. The Y axis shows the strenght of the light (R); the X axis shows the time (t).

Also, if the multistrobe lights are changed such that the red (R) light is at 60Hz while the green (G) light is at 65Hz, the red (R) droplets (a), (b), ... (f) will appear still, while the green (G) droplets (a′), (b′), ... (f′) will appear to climb back up the parabola toward the fountain (W).

If the multistrobe light flashing frequencies for the red (R) and green (G) lights described above are reversed, the apparent movement of the droplets described above will reverse.

Then, if these red (R) and green (G) multistrobe lights are set out of initial phase and used to illuminate the same area of a conventional fountain that scatters numerous droplets, the movement of the droplets of each colour does not appear uniform. Rather, it appears that the number of droplets has suddenly doubled.

Also, if two or more multistrobe lights are used to illuminate rain, a waterfall, or a stream or brook, the droplets appear to increase and the movements become extremely complex, an appearance of tremendous variation.

In addition, if glass or plastic beads are hurled as from a fountain or dropped as from a waterfall, and illuminated with two or more multistrobe lights, the effect will be the same as for the water droplets described above.

Further, air bubbles in water can be illuminated by the same method.

Thus, illumination by two or more multistrobe lights of different colours, makes such moving granulate entities distinctly observable. By altering the frequency of the strobe lights the movement of the granulate entities can be altered in numerous ways, and this method can therefore be used to increase the aesthetic beauty and interest of fountains or waterfalls in parks or at special events, or the behaviour of the entities can be made clear for analysis.

## Claims

1. A method of discriminating moving granulate entities, the method comprising illuminating said entities with at least two stroboscopic light sources of respective different colours.

2. A method according to claim 1, wherein said stroboscopic light sources flash at the same frequency.

3. A method according to claim 2, wherein said stroboscopic light sources flash at different frequencies from each other.

4. A method according to any preceding claim, wherein the flashing frequency of at least one of the light sources is varied.

5. A method according to any preceding claim, wherein the light sources flash at a frequency of at least 10Hz.

6. An apparatus comprising a means for producing moving granulate entities, a first coloured stropic light source and a second stroboscopic light source of a different colour from said first source.

7. An apparatus according to claim 6, wherein said means for producing moving granulate entities comprises a hose and impact means for producing a pulsed water fountain out of said hose.

8. An apparatus according to claim 7, further comprising means for varying the flashing frequency of at least one of said light sources.

EP 0 477 038 A2

FIG 1

FIG 2

FIG 3